# FASCICULE DE BREVET EUROPEEN

(11) **EP 3 207 508 B1**
(45) Date de publication et mention de la délivrance du brevet: **06.11.2019**
(21) Numéro de dépôt: 15775766.7
(22) Date de dépôt: 15.09.2015
(51) Int. Cl.: G06Q 10/08

(54) **INSTALLATION POUR L'IDENTIFICATION DE COLIS MANUTENTIONNÉS**
ANLAGE ZUM IDENTIFIZIEREN VON HANDZUHABENDEN PAKETEN
INSTALLATION FOR IDENTIFYING PARCELS BEING HANDLED

(30) Priorité: 13.10.2014 FR 1459805
(43) Date de publication de la demande: 23.08.2017
(73) Titulaire: Solystic, 92220 Bagneux (FR)
(72) Inventeur: CHIROL, Luc, F-75016 Paris (FR); MIETTE, Emmanuel, F-95210 Saint Gratien (FR)
(74) Mandataire: Prugneau, Philippe
(86) Numéro de dépôt international: PCT/FR2015/052465
(87) Numéro de publication internationale: WO 2016/059313

(56) Documents cités:
- WO-A1-2011/109655
- WO-A1-2014/057182
- US-A1- 2002 008 621
- US-A1- 2007 124 077

## Description

### Domaine technique

Le domaine de l'invention est le traitement de colis, en particulier de colis postaux.

L'invention concerne plus particulièrement une installation de convoyage pour colis manutentionnés, comprenant un convoyeur de colis linéaire adapté pour convoyer des colis en série et une unité centrale de contrôle/commande qui maintient en mémoire la position spatiale instantanée de chaque colis en mouvement sur le convoyeur.

### Technique antérieure

Une telle installation est largement utilisée dans les centres logistiques de tri de colis postaux. Généralement, les colis sont déchargés d'un camion et sont placés un par un en série sur un convoyeur linéaire par un Opérateur et sont convoyés vers des sorties de tri du convoyeur linéaire pour ensuite être livrés selon un ordre de la tournée du facteur.

Des capteurs de passage sont disposés le long du convoyeur et sont reliés à l'unité centrale ce qui permet à celle-ci, à partir du calcul de la position spatiale instantanée de chaque colis, de les aiguiller vers la sortie de tri qui correspond à l'adresse de livraison du colis.

La lecture de l'adresse de livraison de chaque colis est classiquement réalisée par une caméra montée sur un portique à l'entrée du convoyeur linéaire. Toutefois, ceci oblige l'Opérateur à bien positionner chaque colis avec l'adresse postale de destinataire tournée vers le haut. Par ailleurs, la saisie de l'information à l'entrée du convoyeur présente l'inconvénient de réduire la flexibilité de l'organisation de l'installation.

Il existe également plusieurs documents en lien avec ce type d'installation tels que les documents WO2011/109655 et US2002/008621 qui divulguent des systèmes de contrôle d'inventaire et le document WO2014/057182 qui décrit un centre logistique de traitement de colis comprenant au moins un point de dépose/chargement des colis et une zone de rangement destinée à recevoir des colis en attente de chargement et divisée en différents segments correspondants chacun à une expédition des colis.

### Exposé de l'invention

Le but de l'invention est de remédier à ces inconvénients.

L'idée à la base de l'invention est de saisir à la volée l'information apposée sur un colis en mouvement sur le convoyeur à l'aide d'un équipement électronique portatif localisable spatialement par l'unité centrale. Cette information peut être une information d'identification unique de colis comme un code barres ou encore une adresse de livraison du colis, ou encore toute autre information apposée habituellement sur un colis postal ou analogue.

Plus particulièrement, l'invention a pour objet une installation de convoyage pour colis manutentionnés, comprenant un convoyeur linéaire adapté pour convoyer des colis en série, et une unité centrale de contrôle/commande qui maintient en mémoire la position spatiale instantanée de chaque colis en mouvement sur le convoyeur, caractérisé en ce qu'elle comprend en outre au moins un équipement électronique portatif apte à détecter une information apposée sur un colis lorsqu'il est placé à proximité dudit colis et à transmettre cette information à l'unité centrale, en ce que ladite unité centrale est agencée pour relever une position spatiale instantanée dudit équipement portatif en réponse à la réception de ladite information provenant dudit équipement portatif, et en ce que ladite unité centrale
est agencée en outre pour détecter une concordance entre la position spatiale instantanée d'un certain colis sur le convoyeur et ladite position spatiale instantanée de l'équipement portatif et en réponse à cette détection de concordance, enregistrée en mémoire ladite information en correspondance avec des données associées audit certain colis.

L'Opérateur se déplace donc sur la plateforme logistique de l'installation avec en main l'équipement portatif nomade qu'il peut orienter facilement face à l'information à saisir sur un colis en mouvement sur le convoyeur.

Du fait que cette saisie d'information n'est pas une saisie à poste fixe, elle ne contraint pas l'organisation de l'installation logistique et on peut également prévoir plusieurs équipements portatifs en même temps dans l'installation pour un débit important de colis en entrée du convoyeur linéaire.

L'installation selon l'invention peut avantageusement présenter les particularités suivantes :
- ledit équipement portatif peut être un lecteur de code barres;
- ledit équipement portatif peut être une caméra numérique;
- ledit équipement portatif peut être équipé d'une balise de géolocalisation;
- Les colis sont des colis postaux.

L'invention s'étend à un équipement de tri de colis postaux comprenant une installation logistique telle que définie plus haut.

### Présentation sommaire des dessins

La présente invention sera mieux comprise et d'autres avantages apparaîtront encore mieux à la lecture de la description détaillée qui suit et illustrée sur les dessins.

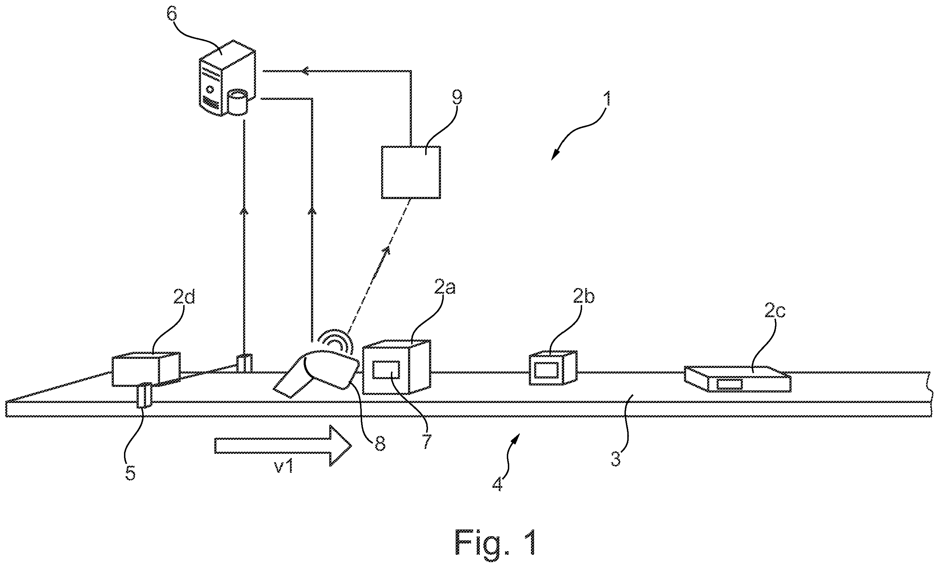

La figure 1 montre très schématiquement une installation avec un convoyeur transportant des colis postaux et un équipement portatif à proximité d'un colis pour saisir à la volée son information d'identification.

### Description d'un mode de réalisation

Sur la figure 1, on a illustré en partie une installation logistique 1 pour convoyer des colis manutentionnés, ici des colis postaux tels que 2a, 2b, 2c et 2d, à l'aide d'un convoyeur linéaire 3 adapté pour transporter les colis en série par exemple vers des sorties de tri, non représentées sur la figure 1. Il est entendu que l'invention s'étend à un équipement de tri de colis postaux incluant l'installation logistique 1.

Le convoyeur 3 est pourvu d'une section 4 de convoyage le long de laquelle un Opérateur peut s'approcher des colis en mouvement sur le convoyeur 3.

On a illustré par la flèche V1 la vitesse de déplacement des colis sur le convoyeur. La vitesse V1 peut être relativement constante.

On a aussi illustré un capteur de passage 5 en amont de la section de convoyage 4. Le capteur 5 peut être une cellule de détection photoélectrique.

On a encore illustré sur la figure 1, une unité centrale 6 de contrôle/commande qui est apte à maintenir en mémoire la position spatiale instantanée de chaque colis sur le convoyeur depuis l'instant où le colis en question a franchi un capteur de passage comme le capteur de passage 5.

Une donnée représentative de la position spatiale instantanée du colis tel que 2a peut par exemple être calculée par l'unité 6 à partir de la vitesse V1 et du temps écoulé depuis l'instant T du passage du colis 2a devant le capteur de passage 5.

Selon l'invention, l'installation 1 comprend en outre un équipement électronique portatif 8 apte à saisir une information 7 apposée sur un colis lorsqu'il est placé à proximité de celui-ci, ici par exemple à quelques centimètres du colis, et à transmettre cette information 7 à l'unité centrale 6, laquelle en réponse est adaptée pour relever la position spatiale instantanée de l'équipement 8 et pour rechercher une concordance entre la position spatiale instantanée relevée pour l'équipement sensiblement au moment de la saisie d'information et la position spatiale instantanée d'un certain colis sur le convoyeur (celui sur lequel l'information a été saisie).

Si une concordance est trouvée par l'unité 6, celle-ci peut enregistrer en mémoire l'information saisie et en correspondance avec des données en mémoire associées à ce colis.

Cette information peut être un code d'indentification unique de colis ou encore par exemple une image du colis comportant une information d'adresse de livraison.

L'équipement portatif 8 peut être un lecteur de code barres ou encore par exemple une caméra numérique si l'information 7 est une image.

L'équipement portatif 8 est de préférence un équipement portatif communiquant à distance sans fil avec l'unité de contrôle 6. On peut avoir plusieurs équipements portatifs 8 indépendants l'un de l'autre dans l'installation 1.

L'équipement portatif 8 peut être muni d'une balise de géolocalisation qui peut fournir une position spatiale instantanée à l'unité 6 dans un repère en trois dimensions.

Il faut comprendre que la position spatiale instantanée de l'équipement portatif 8 et les positions spatiales instantanées des colis peuvent être déterminées de façon périodique par l'unité centrale 6 et qu'on peut associer à chacune des positions spatiales, une date, de manière à faciliter la détection de concordance.

Il va de soi que la présente invention ne saurait être limitée à la description qui précède d'un de ses modes de réalisation, susceptible de subir quelques modifications sans pour autant sortir du cadre de l'invention. L'invention pourrait aussi s'étendre à d'autres articles que les colis.

## Revendications

1. Installation (1) de convoyage pour colis (2) manutentionnés, comprenant un convoyeur linéaire (3) adapté pour convoyer des colis en série, et une unité centrale (6) de contrôle/commande qui maintient en mémoire la position spatiale instantanée de chaque colis (2) en mouvement sur le convoyeur (3), **caractérisée en ce qu'**elle comprend en outre au moins un équipement électronique (8) portatif apte à détecter une information (7) apposée sur un colis (2) lorsqu'il est placé à proximité dudit colis (2) et à transmettre cette information (7) à l'unité centrale (6), **en ce que** ladite unité centrale (6) est agencée pour relever une position spatiale instantanée dudit équipement portatif (8) en réponse à la réception de ladite information (7) provenant dudit équipement portatif (8), et **en ce que** ladite unité centrale (6) est agencée en outre pour détecter une concordance entre la position spatiale instantanée d'un certain colis sur le convoyeur et ladite position spatiale instantanée de l'équipement portatif (8) et en réponse à cette détection de concordance, enregistrer en mémoire ladite information en correspondance avec des données associées audit certain colis.

2. Installation selon la revendication 1, **caractérisée en ce que** ledit équipement portatif (8) est un lecteur de code barre.

3. Installation selon la revendication 1, **caractérisée en ce que** ledit équipement portatif (8) est une caméra.

4. Installation selon l'une des revendications précédentes, **caractérisée en ce que** ledit équipement portatif (8) est équipé d'une balise de géolocalisation.

5. Installation selon l'une quelconques des revendications 1 à 4, **caractérisée en ce que** les colis sont des colis postaux.

6. Equipement de tri de colis postaux, **caractérisé en ce qu'**elle comprend une installation selon la revendication 5.

## Patentansprüche

1. Einrichtung (1) zum Fördern für umgeschlagene Frachtstücke (2), umfassend einen Linearförderer (3), der ausgebildet ist, um Frachtstücke seriell zu fördern, und eine zentrale Regel-/Steuereinheit (6), die die momentane räumliche Position jedes auf dem Förderer (3) bewegten Frachtstücks (2) speichert,
**dadurch gekennzeichnet,**
**dass** sie ferner wenigstens eine tragbare elektronische Ausrüstung (8) umfasst, die in der Lage ist, eine auf einem Frachtstück (2) angebrachte Information (7) zu detektieren, wenn die Ausrüstung in der Nähe des Frachtstücks (2) platziert ist, und diese Information (7) an die zentrale Einheit (6) zu übermitteln,
**dass** die zentrale Einheit (6) ausgebildet ist, um eine momentane räumliche Position der tragbaren Ausrüstung (8) in Reaktion auf das Empfangen der von der tragbaren Ausrüstung (8) stammenden Information (7) zu erheben, und
**dass** die zentrale Einheit (6) ferner ausgebildet ist, eine Konkordanz zwischen der momentanen räumlichen Position eines bestimmten Frachtstücks auf dem Förderer und der momentanen räumlichen Position der tragbaren Ausrüstung (8) zu detektieren und in Reaktion auf diese Detektion der Konkordanz die mit den mit dem bestimmten Frachtstück verknüpften Daten korrespondierende Information abzuspeichern.

2. Einrichtung nach Anspruch 1, **dadurch gekennzeichnet, dass** die tragbare Ausrüstung (8) ein Barcodelesegerät ist.

3. Einrichtung nach Anspruch 1, **dadurch gekennzeichnet, dass** die tragbare Ausrüstung (8) eine Kamera ist.

4. Einrichtung nach einem der vorhergehenden Ansprüche, **dadurch gekennzeichnet, dass** die tragbare Ausrüstung (8) mit einem Geolokalisierungs-Signalgeber (1) ausgestattet ist.

5. Einrichtung nach einem der Ansprüche 1 bis 4, **dadurch gekennzeichnet, dass** die Frachtstücke postalische Frachtstücke sind.

6. Postsortiervorrichtung, **dadurch gekennzeichnet, dass** sie eine Einrichtung nach einem der Ansprüche 1 bis 5 umfasst.

## Claims

1. An installation (1) for conveying handled parcels (2), said installation including a linear conveyor (3) for conveying parcels in series, and a monitoring and control central unit (6) that stores, in a memory, the instantaneous three-dimensional position of each parcel (2) moving on the conveyor (3), said installation being **characterized in that** it further includes at least one handheld electronic unit (8) that is suitable for detecting information (7) on a parcel (2) when it is placed in the vicinity of said parcel (2), and for transmitting said information (7) to the central unit (6), and **in that** the central unit (6) is arranged to read an instantaneous three-dimensional position for said handheld unit (8) in response to receiving said information (7) coming from said handheld unit (8), and **in that** said central unit (6) is further arranged to detect a match between the instantaneous three-dimensional position of a certain parcel on the conveyor and said instantaneous three-dimensional position of the handheld unit (8), and to respond to such a match being detected by recording said information in a memory in correspondence with data associated with said certain parcel.

2. An installation according to claim 1, **characterized in that** said handheld unit (8) is a bar code reader.

3. An installation according to claim 1, **characterized in that** said handheld unit (8) is a camera.

4. An installation according to any preceding claim, **characterized in that** said handheld unit (8) is equipped with a geotag.

5. An installation according to any one of claims 1 to 4, **characterized in that** the parcels are postal parcels.

6. A postal parcel sorting facility, **characterized in that** it includes an installation according to claim 5.
